# EUROPÄISCHE PATENTSCHRIFT

(11) **EP 1 392 043 B1**
(45) Veröffentlichungstag und Bekanntmachung des Hinweises auf die Patenterteilung: **30.03.2011**
(21) Anmeldenummer: 03102219.7
(22) Anmeldetag: 18.07.2003
(51) Int. Cl.: H04M 3/56, H04M 3/20, H04M 3/22

(54) **Verfahren und Vorrichtung zum Bereitstellen von Konferenzen**
Method and device for providing conferences
Procédé et dispositif pour fournir des conférences

(30) Priorität: 21.08.2002 DE 10238286
(43) Veröffentlichungstag der Anmeldung: 25.02.2004
(73) Patentinhaber: Nokia Siemens Networks GmbH & Co. KG, 81541 München (DE)
(72) Erfinder: Friedrich, Peter, 15370 Petershagen (DE); Löbig, Norbert, Dr., 64291 Darmstadt (DE)

(56) Entgegenhaltungen:
- EP-A- 1 096 767
- EP-A- 1 156 647
- WO-A-00/72560
- CH-A- 681 409
- US-A- 5 548 638
- US-B1- 6 411 683

## Beschreibung

Die Erfindung betrifft ein Verfahren und eine Vorrichtung gemäß den Oberbegriffen der Patentansprüche 1 und 16.

Dienste für Audio-Konferenzen gehören beim Stand der Technik zum unverzichtbaren Leistungsumfang von sprachvermittelnden Netzen. Sie werden von den Vermittlungsstellen des Netzes oder auch von vermittlungsstellenexternen Netzelementen realisiert. Hierbei basiert die Konferenzfunktion auf einer Mischfunktion für den Audiostrom der beteiligten Konferenzteilnehmer (Conferees), die von einer speziellen Hardware mit DSP-Kapazität (Digital Signal Prozessor) bereitgestellt wird.

Aus der Druckschrift US-A-5 548 638 ist eine Vorrichtung zur Bereitstellung von Audio-Telekonferenzen bekannt, welche Zweiwegekommunikation zwischen mehr als zwei Teilnehmern erlaubt ohne die Notwendigkeit vollständiger Durchschaltung und welche es nicht zulässt, dass ein Verlust in einem Kommunikationskanal eines speziellen Sprechers ansteigt. Die Vorrichtung umfasst ferner mehr als zwei Leitungsschnittstellenschaltungen, welche jeweils mit einem Sprachaktivitätserkenner ausgerüstet sind, einem Mittel zum Einbringen eines variablen Verlustes in einen Sprache empfangenden Weg, wenn das empfangene Sprachsignal nicht-aktive Sprache ist, und einem Mittel zum Einbringen eines variablen Verlusts in eine Sprachsignalübertragung oder einen sendenden Weg, wenn die zu sendende Sprache sprachaktiv ist, wobei ein bestimmter Verlust in der Leitungsschnittstellenschaltung in jede 4 Draht Multiplexschleife eingefügt wird.

In der Druckschrift WP-A-00 72560 werden ein System und ein Verfahren zur Bereitstellung einer Audio-Konferenz-Brücke beschrieben. Hierbei wird für jeden Teilnehmer einer Konferenz eine separate Mischfunktion bereitgestellt. Die entstehende Architektur wird als EdgePoint Mixing bezeichnet und stellt jedem Konferenzteilnehmer die Steuerung hinsichtlich seines Konferenzerlebnisses zur Verfügung. Edge-Point Mixing erlaubt, wenn. gewünscht, die Simulation einer "real-life" Konferenz, dadurch dass jedem Konferenzteilnehmer gestattet wird, ein speziell gemischtes Audiosignal von der Konferenz zu empfangen, welches abhängt von der Position des Sprechers innerhalb einer virtuellen Konferenzwelt.

Im klassischen Fall, wo der Nutzkanal einer Verbindung in die Vermittlungsstelle hineingeführt wird, können die Konferenz- und hierzu benötigte Ansage- und Tonfunktionen von mit entsprechender Funktionalität ausgerüsteten peripheren Einrichtungen oder externen Einrichtungen bereitgestellt werden. Werden die Nutzdaten jedoch außerhalb der Vermittlungsstelle in einem Paketnetz geführt, so wird hierzu vorzugsweise mindestens ein externes Konferenzsystem genutzt. Dieses weist Schnittstellen zum Paketnetz für die Nutzdaten der Konferenz auf. Die Nutzdaten der Konferenz sind dabei entweder die Nutzdaten der einzelnen Konferenzteilnehmer oder die einzubringenden Ansagen/ Dialoge und Töne sowie das an die Konferenzteilnehmer zu verteilende, über mindestens eine Konferenzbrücke erzeugte Mischsignal. Zusätzlich kann das externe Konferenzsystem eine Steuerschnittstelle zu der für die Steuerung von außerhalb der Vermittlungsstelle geführten Verbindungen im Paketnetz tätigen Vermittlungsstelle aufweisen, um die gewünschten Grundfunktionen während der Konferenz zu steuern oder die Einstreuung von z. B im externen Konferenzsystem erzeugten Ansagen/ Dialogen und Tönen zu veranlassen.

Grundsätzlich weisen Konferenzdienste eine Mehrzahl von Konferenzleistungsmerkmalen auf, wobei Unterscheidung und Abgrenzung im Hinblick auf Initiierung und Steuerung des Verlaufs der Konferenz erfolgt:

So gibt es zum einen Konferenzleistungsmerkmale, mit denen man als Teilnehmer durch DIAL-IN (Einwahl des Konferenzteilnehmers in die Konferenz) oder durch DIAL-OUT (Anruf des Teilnehmers aus der Konferenz) einbezogen wird, d. h. der Verlauf der Konferenz wird durch die Verfügbarkeit der Konferenzteilnehmer charakterisiert (z. B. durch Hinzuschalten von Teilnehmern zur Konferenz oder Verlassen von Teilnehmern aus der Konferenz).

Zum anderen gibt es Konferenzleistungsmerkmale, die durch den Konferenzführer oder die Konferenzteilnehmer der gesteuerten Konferenzen geprägt sind. Hierbei können z.B. durch einen Konferenzführer mittels geeigneter DSS1-Signalisierung (ETSI ADD-ON Konferenz) oder über zusätzliche graphische Bedienung an einem PC-artigen Endgerät, Konferenzteilnehmer hinzugeschaltet, stummgeschaltet oder von der Konferenz getrennt werden. Diese die Konferenz steuernden Konferenzleistungsmerkmale sind oftmals dem Konferenz Service Operator verfügbar, der die Konferenz-Ressourcen im Netz verwalten und den Konferenzdienst überwachen kann.

Im Hinblick auf Video-Konferenzen, die zunehmend in paketbasierten Netzen Anwendung finden, erhöht sich das Steuerungsbedürfnis der Konferenz durch die beteiligten Konferenzteilnehmer, die in erhöhtem Maße Einfluss auf das zu sehende Bild haben möchten. Hierzu gehört die Auswahl eines oder mehrerer Teilnehmer während der Konferenz, ein sprachaktiviertes Umschalten des Bildes auf den augenblicklich sprechenden Konferenzteilnehmer, die gleichzeitige Bildverfügbarkeit einer gewissen Anzahl von Konferenzteilnehmer sowie das zusätzliches Einblenden von Dokumenten.

In umgekehrter Richtung informieren die existierenden Konferenzlösungen die aktuell in einer Konferenz befindlichen Teilnehmer über den Eintritt eines weiteren Teilnehmers in die Konferenz oder die Tatsache, dass ein Konferenzteilnehmer aus der Konferenz ausgeschieden ist, über Konferenztöne und/oder durch i.a. wenige Konferenzansagen entsprechenden Inhalts.

Im Hinblick auf Initiierung und Steuerung der Konferenzen werden Konferenzdienste wie folgt unterschieden:

Bei der ETSI-ADD-ON Konferenz ist die Bedienung definitionsgemäß nur in einer lokalen Vermittlungsstelle möglich. Sie wird über Teilnehmersignalisierung initiiert und gesteuert (Ziffernfolgebedienung). Sie ist primär in TDM - aber auch in paketbasierten Netzen, deren Vermittlungsstellen klassische Teilnehmersignalisierung unterstützen, realisierbar und kann unmittelbar (AD HOC) initiiert werden.

Die PRESET Konferenz stellt einen Kompromiss aus AD HOC Initiierung bei gleichzeitig vordefinierter Konferenzteilnehmerliste dar.

Als allgemeiner Service im Netz (öffentliche Konferenz) wird die PHONEMEET Konferenz angeboten. Dieser dem Chat im Internet sehr ähnliche, aber viel ältere Dienst stellt einen Service Code zur Verfügung, unter dem man sich themenspezifisch in eine Konferenz einwählen und mit bereits zum Thema eingewählten Konferenzteilnehmern austauschen kann. Die Konferenzteilnehmer kennen sich i.a. nicht und haben auch keine Gewähr dafür, dass sie bei erneutem Einwählen in eine erneute gemeinsame Konferenz verbunden werden. Die charakterisierende Eigenschaft dieses Dienstes ist, dass sich im öffentlichen Netz Teilnehmer unterhalten können, die sich i.a. nicht kennen. Hier ist keine Steuerung durch Konferenzteilnehmer erforderlich, eine automatische Störerüberwachung ist auch nicht verfügbar. Einige Netzbetreiber lassen die Verfügbar keit der Konferenz und den ungestörten Konferenzverlauf durch Operatoren überwachen, die durch sporadisches Mithören unliebsame Störer erkennen und isolieren sollen.

Vorreservierte Konferenzen sind als DIAL-IN, DIAL-OUT oder MIXED DIAL-IN/DIAL-OUT Konferenzen verfügbar. Sie sind insbesondere für Geschäftskunden nutzbar. Nachteilig ist, dass Vorreservierung und Konferenzplanung manuell erfolgen muss, eine AD HOC Verfügbarkeit ist somit nicht gegeben.

Der Vollständigkeit halber seien noch Konferenzdienste mit Web-basierter Bedienoberfläche (wie z. B. Siemens SURPASS WEBCONFER) und TERMINAL Konferenzen, die gemäß einiger Signalisierungsstandards unterstützt werden, angesprochen. Erstere sind über Internetzugriffe buchbar und steuerbar. Der Vorteil einer Web-basierten Bedienung mit Status Display wird durch den Nachteil des Internetzugriffs mit ggf. zusätzlich erforderlichem Endgerät beim Konferenzführer sowie mangelnder Interaktionen mit den Konferenzteilnehmern eingeschränkt. TERMINAL Konferenzen sind z. B. mit den Festlegungen des H.323 Standards (oder auch SIP Standards) mögliche, auf die Funktionen der Endgeräte abgestützte Konferenzen für Audio, Video, Daten, womit klassische Endgeräte nicht verwendbar sind. Hier ist eine zentrale Brücke entbehrlich. Große Konferenzen mit vielen Teilnehmern sind damit jedoch wegen der beschränkten Performanz der Endgeräte nicht möglich. Weiterer Nachteil ist der erhöhte Bandbreitenbedarf zwischen den Konferenzteilnehmern.

Für alle Konferenzdienste sind im Netz Ressourcen bereitzustellen. Da Konferenz-Ressourcen kostenintensives Investment für den Netzbetreiber bedeuten, werden sie nicht in beliebig hoher Anzahl im Netz vorgehalten. Dies bedeutet einen erhöhten Steuerungsaufwand; denn zusätzlich zu den Interaktionen des Konferenzführers und der Teilnehmer während der Konferenz kommt i.a. eine Abstimmung des Konferenztermins, der Verfügbarkeit der Konferenzteilnehmer und entsprechender Konferenz ressourcen sowie der Unterrichtung der Teilnehmer über Zeitpunkt und Zugangberechtigung hinzu, die den Erfolg einer Konferenz sichert.

Die AD HOC initiierbaren Konferenzen haben erfahrungsgemäß eine durch Ziffernfolgebedienung der Telephonie gekennzeichnete oder eine graphische, an ein höherwertiges, intelligentes, eventuell zusätzliches Endgerät gebundene Bedienoberfläche, die der sporadischen sofortigen Bedienbarkeit von beliebigem Endgerät her Grenzen setzen. Die den Konferenzteilnehmern zur Verfügung gestellten Systemtöne und -ansagen erlauben nur globale Rückschlüsse auf den Verlauf und den Status der Konferenz. Im Hinblick auf die vorreservierten Konferenzen sind unter Umständen erhebliche, manuelle Interaktionen vor Konferenzbeginn erforderlich. Derartige Hemmnisse erschweren Einsatz, Umgang und Erfolg von Konferenzlösungen.

Der Erfindung liegt die Aufgabe zugrunde, Konferenzdienste der eingangs genannten Art derart weiterzubilden, dass deren Bedienung und Steuerung erheblich erleichtert wird.

Die Erfindung wird ausgehend von den im Oberbegriff von Patentanspruch 1 angegebenen Merkmalen durch die im kennzeichnenden Teil beanspruchten Merkmale gelöst.

Ein besonderer Vorteil der Erfindung ist darin zu sehen, dass eine Steuerschnittstelle zwischen einer Ansage-/ Dialog-Funktion mit entsprechender Spracherkennungsfunktionalität und einer Konferenzmanagement-Funktion bereitgestellt wird. Damit wird die Vorbereitung und Bedienung/ Steuerung von Konferenzdiensten wesentlich vereinfacht. Beispielsweise können damit die die Konferenz steuernden funktionalen Eingaben über Ziffernfolgen entfallen, da die auf Spracherkennungsfunktionalität basierenden Techniken einen bequemeren Dialog zwischen Mensch und Maschine unterstützen. Korrekturen von Eingaben durch Teilnehmer oder Operator sind damit in einfacher Weise möglich. Grundsätzlich wird damit die Bedienung für al le derzeit bekannten Konferenztypen in TDM und paketbasierten Netzumgebungen vereinfacht, also insbesondere für DIAL-IN, DIAL-OUT, MIXED DIAL-IN/OUT, ETSI ADD-ON, PHONEMEET mit/ ohne Operatorüberwachung, PRESET Konferenz.

Ferner ist die Konferenzfunktionalität insbesondere von AD HOC initiierten Konferenzen von der Teilnehmersignalisierung entkoppelt und auf der Fernebene (d. h. allgemeiner in weiteren Vermittlungssystemen etwa von konkurrierenden Netzbetreibern) verfügbar. Zusatzgeräte mit graphischer Bedienoberfläche sind nicht erforderlich, ebenso wird die Mitwirkung des Operators zur Überwachung von Konferenzen minimiert.

Schließlich liegt der große Vorteil der Erfindung in den positiven Auswirkungen auf die Konferenzdienste. So ist die Verfügbarkeit der ETSI ADD-ON Konferenzfunktionalität mit leichter Bedienbarkeit nicht nur in der lokalen Vermittlungsstelle gegeben, sondern in einem beliebigen TDM- oder paketbasierten Netz durch Einsatz von auf (DTMF- ) Spracherkennung basierenden Techniken zur Überwindung der Restriktionen der Teilnehmersignalisierung. Vorteilhaft werden auf Spracherkennung beruhende Techniken dann benutzt, wenn insbesondere in paketbasierten Netzen komprimierende Kodierungsverfahren angewendet werden, die die störungsfreie DTMF-Übertragung nicht garantieren. Ferner können alle Buchungs- und Verwaltungsvorgänge für Konferenzdienste durch Einsatz entsprechender IVR-Logik (Interactive Voice Response) ebenso automatisiert werden wie Störererkennung und Abhörinitiierung sowie Steuerung der Folgeaktivitäten durch Spracherkennungsmechanismen.

Vorteilhafte Weiterbildungen der Erfindung sind in den Unteransprüchen vorgesehen.

Die Erfindung wird im folgenden anhand eines figürlich dargestellten Ausführungsbeispiels näher erläutert.

Es zeigen:
- Figur 1: die grundlegenden Verhältnisse im Netz,
- Figur 2: die für die Eliminierung von Störern einer Konferenz eingebundenen Netzelemente und Schnittstellen.

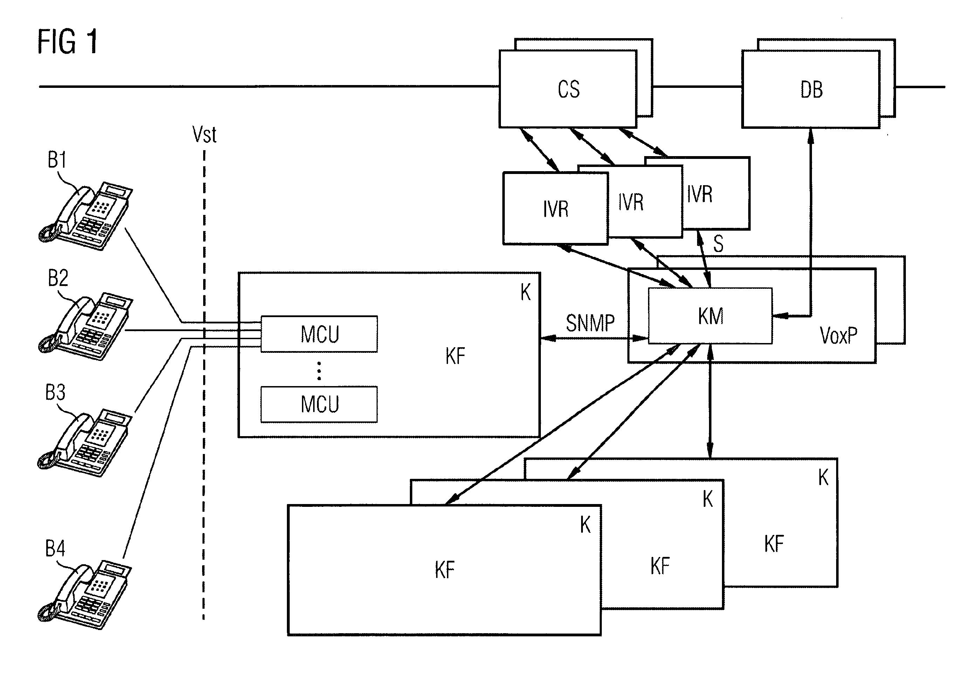

In Fig. 1 sind die grundlegenden Verhältnisse gemäß der Erfindung aufgezeigt. Es wird gemäß vorliegendem Ausführungsbeispiel davon ausgegangen, dass ein öffentliches TDM- oder paketbasiertes, insbesondere IP-basiertes Netz vorliegt, in welchem zur Bereitstellung von komfortablen Konferenzdiensten jeweils mindestens eine Ansage und Dialog-Funktion IVR, eine Konferenzmanagement-Funktion KM und mindestens eine Konferenzfunktion KF vorhanden sind.

Ferner sind Fig. 1 beispielhaft 4 Teilnehmer B1 bis B4 entnehmbar, die einer Konferenz beiwohnen möchten. Diese 4 Konferenzteilnehmer werden von einem Vermittlungssystem Vst bedient und gesteuert. Weiterhin sind in Fig. 1 mehrere voneinander unabhängige Konferenzsysteme K offenbart, in denen die Konferenz-Funktion KF zum Ablauf gelangt. Als Teil eines Konferenzsystems sind Schnittstelleneinrichtungen MCU anzusehen, die als Abschluss der Nutzdatenströme von und zu den Konferenzteilnehmern anzusehen sind.

Die Nutzdaten der Konferenzteilnehmer werden unter Steuerung der Vermittlungsstelle Vst durchgeschaltet und diesen Schnittstelleneinrichtungen MCU zugeführt. Hier wird auch die Mischung der Nutzdatenströme vorgenommen.

Die Konferenzfunktion KF stellt grundsätzlich eine klassische Mischfunktion multipler Eingangssignale für Audio- oder Videosignale dar. Ferner unterstützt sie die Verteilfunktion auch für weitere Informationen. Die hierfür vorzusehende Plattform zeichnet sich durch Telephonie-Schnittstellen zur Anpassung an Netz und Signalisierung ebenso aus wie durch DSP-basierte Mischfunktionen für den Audiostrom und ggf. weitere Funktionen zur Steuerung der Videoausgaben (z. B. Voice Activated Video Switching).

Von der Konferenzfunktion KF werden Konferenzleistungsmerkmale wie DIAL-IN oder DIAL-OUT in Konferenzverbindungen unterstützt, deren beschreibende Daten über eine Steuerschnittstelle zu einer Konferenzmanagement-Funktion KM bereitgestellt werden. Letztere kann jederzeit über diese Schnittstelle in die Konfiguration einer laufenden Konferenz steuernd eingreifen. Als Protokoll zwischen Konferenzmanagement-Funktion KM und den Konferenzsystemen K wird beispielhaft das SNMP Protokoll verwendet.

Es gibt Konferenzteilnehmer, die in der Weise ausgezeichnet sind, dass ihr Eingangsnutzdatenstrom vor dem Zumischen zum Konferenzmischsignal abgegriffen wird und einer Ansage und Dialog-Funktion IVR für gewisse Zeit zum Zwecke des Überwachens auf Störaktivitäten oder zur Erkennung legitimer, die Konferenz steuernder Eingaben (z. B. durch den Konferenzführer) zugespielt wird. Die Eigenschaft der permanenten oder temporären Zuschaltung einer Ansage und Dialog-Funktion IVR kann hierbei über eine Steuerschnittstelle S zwischen Ansage und Dialog-Funktion IVR und Konferenzmanagement-Funktion KM erfolgen.

Die Ansage und Dialog-Funktion IVR gelangt auf mindestens einer separaten Einrichtung oder ggf. auch kollokiert mit der nachstehend noch genauer erläuterten Funktion KM auf einer Einrichtung VoxP zum Ablauf. Sie dient der Dialogführung mit der Eingabeerkennung von dem Konferenzführer oder den Konferenzteilnehmern, wobei DTMF-Eingaben, menügeführte Dialoge oder vorzugsweise Schlüsselworterkennung im natürlichen Dialog (Natural Dialogue, Keyword Spotting) in Frage kommen. Die für die Ansage und Dialog-Funktion IVR benötigte HW-Plattform zeichnet sich i.a. wegen der in öffentlichen Netzen geforderten Performanz durch Telephonie-Schnittstellen aus, die die Anpassung an die Netztechnologie und Signalisierung vornehmen, sowie durch HW und SW, die die Spracherkennungsaufgaben übernehmen (z. B. DSPs, Spracherkennungsalgorithmen).

Die für die Ansage und Dialog-Funktion IVR notwendigen konferenzspezifischen Dialogabläufe sind in geeigneter Weise auf einem Content Server CS hinterlegt, z.B. in Form von VoiceXML Scripts, die aufgrund der Konferenzkonfiguration erstellt werden und die vollständige Dialogabfolge für das IVR System ergeben.

Schließlich ist Fig. 1 eine Konferenzmanagement-Funktion KM entnehmbar, die als reine SW-Funktion ausgebildet ist und die auf einer Einrichtung VoxP zum Ablauf gelangt. Von dieser wird übergreifend ggf. netzweit der Status der Konferenzsysteme K und -deren Ports überwacht und gepflegt. Eine weitere wesentliche Funktionalität liegt in der Reservierung der im voraus gebuchten Konferenzen, in der zeitgerechten Aktivierung und Überwachung/ Steuerung der Konferenzen selbst sowie in der Erzeugung von Gebührentickets insbesondere im Hinblick auf die Reservierung von Ressourcen im Netz. Von der Konferenzmanagement-Funktion KM werden Buchungsdaten und Vergebührungsdaten und ggf. Fehlerindizien sowie Verkehrs- und Statistikdaten auf einem Datenbasis Server DB hinterlegt.

Erfindungsgemäß weist nun die Ansage und Dialog-Funktion IVR eine Steuerschnittstelle S zur Konferenzmanagement-Funktion KM auf, mit der sie in der Lage ist, Buchungsdaten einer Konferenz oder die initialen Konferenzparameter einer AD HOC Konferenz an die Konferenzmanagement-Funktion zur weiteren Behandlung auszugeben. In umgekehrter Richtung bezieht die Ansage- und Dialog-Funktion IVR ggf. Informationen über die aktuell bzw. für den beabsichtigten Buchungszeitraum abdeckbaren Ressourcenbedarf von der Konferenzmanagement-Funktion sowie ggf. Gebühreninformationen zur Gestaltung des Dialogs mit dem Konferenzbesteller/ Konferenzführer.

Die Konferenzmanagementfunktion überblickt die Verfügbarkeit von Konferenzressourcen ggf. netzweit und kann damit insbesondere auch Konferenzen unterstützen und reservieren, die aufgrund ihrer Größe oder im Falle von Ressourcenengpässen sich über mehrere Konferenzsysteme erstrecken (Kaskadierung).

Schließlich sind aus Gründen der Ausfallsicherheit Datenbasis Server DB, Content Server CS, Konferenzmanagement-Funktion KM, Ansage- und Dialog Funktion IVR und die Konferenzfunktion KF mindestens gedoppelt ausgeführt. Die genannten Funktionen müssen nicht notwendigerweise auf verschiedenen HW-Plattformen realisiert werden. Insbesondere IVR- Funktion und KM-Funktion können auf unterschiedlichen HW-Plattformen realisiert sein.

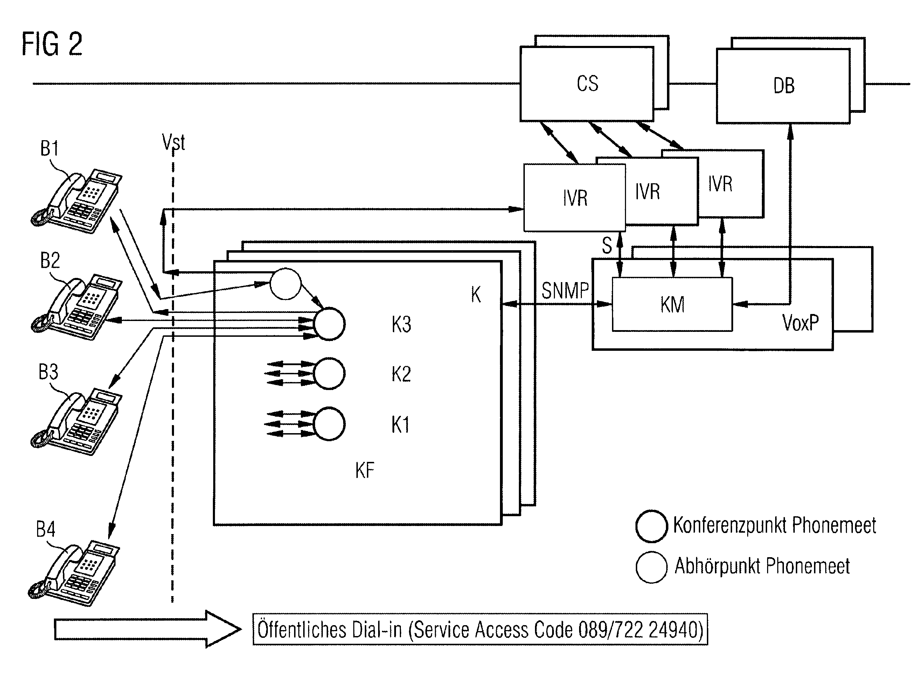

In Fig. 2 ist als Anwendung des erfindungsgemäßen Verfahrens aufgezeigt, wie Störsignale abgebende Konferenzteilnehmer, im folgenden kurz mit Störer bezeichnet, automatisiert aus einer Konferenz eliminiert werden können. Dies bedeutet, dass ein automatisierter Operator anstelle eines menschlichen Operators fungiert. Beispielhaft sei hier eine PHONEMEET Konferenz angesprochen. Da dieser Konferenzdienst zu vergebühren ist, ist der Netzbetreiber daran interessiert, die Verfügbarkeit des Dienstes zu sichern und zu überwachen.

Es sind also automatisierte Operatoren erforderlich. Diese sollen sich sukzessive auf eine laufende PHONEMEET Konferenz aufschalten, um zu verifizieren, dass keine Störer an der Konferenz teilnehmen. Letzteres wird typischerweise durch Einspeisung von störenden Tönen oder durch Beschimpfungen offenbar. Derartig störende Konferenzteilnehmer werden dann durch den Operator aus der Konferenz entfernt oder zumindest stumm geschaltet. In gleicher Weise wird man anstreben, im Falle anstößiger Beiträge oder sogar gesetzlich verbotener Inhalte zu verfahren.

Damit der Operator bei Erkennung von Störern nur diese aus der Konferenz heraustrennen kann und nicht die ganze Konferenz auslösen muss, stellt die Steuerung des Konferenzsystems dem Operator die Möglichkeit der Einwahl bzw. die Aufschaltung auf die komplette Konferenz sowie die Einwahl bzw. die Aufschaltung auf jeden Konferenzteilnehmer einer PHONEMEET Konferenz zur Verfügung. Damit ist es dem Operator möglich, die betroffene Konferenz zu selektieren und sodann einen möglichen Störer aufzufinden.

Fig. 2 zeigt die hierfür benötigten Netzelemente und Schnittstellen. Vorzugsweise werden die Abläufe mit Hilfe von Spracherkennungsalgorithmen mit Schlüsselworterkennung automatisiert. Damit verschafft sich ein Erkennersystem oder auch ein IVR-System sukzessive Zugriff auf alle PHONEMEET Konferenzen und lauscht zunächst an der Konferenz (z. B. K1, K2, K3). Wird aufgrund hoher Lautstärkepegel, erkannter Schimpfworte durch das Spracherkennungssystem oder sonstiger Kriterien ein Störer identifiziert, schaltet sich das Erkennersystem/IVR-System sukzessive auf jeden einzelnen Konferenzteilnehmer auf, um eine detailliertere Prüfung vorzunehmen. Die Daten zur Aufschaltung gewinnt das Erkennersystem/ IVR-System über das Konferenzmanagement-System aus der Datenbasis DB, die die Anzahl der PHONEMEET Konferenzen und ihre Eigenschaften, wie maximale Teilnehmeranzahl und Erreichbarkeit für die Monitorfunktion enthält. Die Aufschaltung kann durch Einwahl in das Konferenzssystem K erfolgen, wie in Fig. 2 dargestellt, oder auch über die Steuerungsschnittstelle des Konferenzsystems. Das Konferenzsystem erkennt an der Signalisierung der übergeordneten Vermittlungsstelle, z. B. an der A-Rufnummer des Erkennersystems/ IVR-Systems oder am Zugriff über die Steuerschnittstelle, dass es sich um eine routinemäßige Aufschaltung einer Operatorfunktion handelt, die keinerlei wahrnehmbare Indizien in Richtung der geprüften oder weiterer Konferenzteilnehmer generiert.

Wird das Aufschalten auf einen bestimmten Konferenzteilnehmer verlangt, so wird dessen Eingabestrom in die Konferenz zusätzlich dem Erkennersystem/IVR-System weitergeleitet. Dies ist symbolisch in Fig. 2 durch Einschleifen eines weiteren Abhörpunktes dargestellt, was unter Umständen jedoch nicht die tatsächlichen HW Verhältnisse widerspiegelt. Die Aufschaltung auf einen Konferenzteilnehmer oder die ganze Konferenz kann per Kommandoschnittstelle oder durch Auslösen der Aufschalteverbindung durch das Erkennersystem/ IVR-System oder das Konferenzmanagement-System beendet werden.

Wird ein einzelner Störer erkannt und identifiziert, so erfolgt der Anstoß zu seiner Isolation durch das Erkennersystem/ IVR-System in Richtung Konferenzsystem. Dies kann vorzugsweise über die Steuerschnittstelle des Konferenzsystems erfolgen, aber auch alternativ durch geeignete Einwahl zur Signalisierung des Wunsches zum Auslösen oder Stummschalten eines bestimmten Konferenzteilnehmers. Wird der Störer stumm geschaltet, so kann er weiterhin der Konferenz zuhören bzw. zusehen oder alternativ auch eine Ansage durch das IVR-System gespielt bekommen zur Erklärung des Isolationszustands und der getroffenen Folgemaßnahmen (Stummschaltung oder Auslösen aus der Konferenz). Sinnvollerweise sichert das Konfrenzmanagement-System die Daten des Störers (also z. B. die A-Rufnummer), soweit verfügbar, in einem Datenspeicher, z.B. in der Datenbasis des Content Servers CS.

Der Anstoß der Monitorfunktion zur Störerelimination kann über die Bedienerschnittstelle der Einrichtung VoxP erfolgen. Die Details des Monitoring sind in Form von VoiceXML Scripts auf dem Content Server CS hinterlegt. Die alle aktuell verfügbaren und zu prüfenden Konferenzpunkte umfassenden VoiceXML-Seiten können mit Hilfe der aus der der Datenbasis DB gewonnen und von der Konferenzmanagementfunktion KM bereitgestellten Statusparameter durch den Content Server generiert werden.

Als Alternative für kleine Netzkonfigurationen mit beispielsweise nur einem einzigen Konferenzserver kann die Erkenner/IVR/ Konferenzmanagement-Funktion auch auf dem Konferenzserver selbst zum Ablauf gelangen.

In der voranstehenden Anwendung wird das IVR-Sytem als reines Erkennersystem genutzt. Sollen dem isolierten Teilnehmer erklärende Ansagen gespielt werden, so ist ein Erkennersystem mit Ansagefunktionalität erforderlich. Nur in dem Falle, dass dem stumm geschalteten Störer ein Dialog angeboten werden soll, der ihm die Auswahl unterschiedlicher Optionen anbietet (z. B. Beschwerdefunktion...), ist das Vorhandensein einer vollen interaktiven Erkenner und Antwortfunktion, also die volle IVR-Funktionalität erforderlich.

## Patentansprüche

1. Verfahren zum Eliminieren von Störern aus Konferenzen, mit mindestens einer, mit einer Spracherkennungsfunktion versehenen Erkennerfunktion (IVR), und mindestens einer Konferenzfunktion (KF),
**dadurch gekennzeichnet,**
**dass** eine Konferenzmanagement-Funktion (KM) bereitgestellt wird, von der sukzessive auf alle laufenden Konferenzen zugegriffen wird, wobei der aus den Sprachinformationen aller Teilnehmer einer Konferenz (K1, K2, K3) gebildete Mischstrom von einer Erkennerfunktionen (IVR) einer ersten Prüfung auf Störsignale hin unterzogen wird,
**dass** beim Aufspüren von Störsignalen in dem Mischstrom von der Konferenzmanagement-Funktion (KM) eine Zuordnung der ermittelten Störsignale zu dem diese abgebenden Konferenzteilnehmer vorgenommen wird, indem sukzessive auf die Sprachdaten aller Teilnehmer der gestörten Konferenz (K1, K2, K3) zugegriffen und der betreffende Sprachdatenstrom von der Erkennerfunktion (IVR) einer zweiten Prüfung auf Störsignale hin unterzogen wird, und
**dass** im Falle, dass ein Konferenzteilnehmer als Störer identifiziert wird, dieser aus der Konferenz isoliert wird.

2. Verfahren nach Anspruch 1,
**dadurch gekennzeichnet,**
**dass** die aktuellen Kenndaten von Konferenzen und der Konferenzteilnehmern in einer Datenbasis (DB) abgelegt sind, auf Anstoß der Konferenzfunktionen (KF) aktualisiert werden oder auf Anstoß der Erkennerfunktionen (IVR) abgerufen werden können.

3. Verfahren nach Anspruch 1, 2,
**dadurch gekennzeichnet,**
**dass** die Erkennerfunktionen (IVR) mit einer gegebenenfalls schlüsselwortgesteuerten (Keyword Spotting) Spracherkennungsfunktion versehen ist.

4. Verfahren nach Anspruch 1 bis 3,
**dadurch gekennzeichnet,**
**dass** die Störsignale nach Maßgabe von Stör-Kriterien aufgespürt werden, die als erhöhte Lautstärkepegel, Einspeisung von störenden Tönen, als durch das Spracherkennungssystem erkannte Schimpfworte oder anstößige Beiträge, oder gesetzlich verbotene Inhalte ausgebildet sind.

5. Verfahren nach einem der vorstehenden Ansprüche,
**dadurch gekennzeichnet,**
**dass** das Aufschalten auf eine bestimmte Konferenz oder einen bestimmten Konferenzteilnehmer durch Einwahl des Erkennersystems in das jeweilige Konferenzsystem erfolgt oder durch direkte Steuerung des Konferenzsystems durch die Konferenzmanagement-Funktion (KM), worauf der aus Mischung hervorgehende Nutzdatenstrom der Konferenz oder der auf der Konferenzfunktion eintreffende Nutzdatenstrom des bestimmten Konferenzteilnehmers zusätzlich zur Erkennerfunktion (IVR) weitergeleitet wird.

6. Verfahren nach einem der vorstehenden Ansprüche,
**dadurch gekennzeichnet,**
**dass** die Details des Monitoring in Form von VoiceXML Scripts auf mindestens einem den Erkennersystemen (IVR) zugreifbaren Content Server (CS) hinterlegt sind.

7. Verfahren nach einem der vorstehenden Ansprüche,
**dadurch gekennzeichnet,**
**dass** die alle aktuell verfügbaren und zu prüfenden Konferenzpunkte umfassenden VoiceXML-Seiten mit Hilfe der aus der Datenbasis (DB) gewonnen Statusparameter durch den Content Server (CS) generiert werden und dem anfordernden Erkennersystemen (IVR) zur Verfügung gestellt werden.

8. Verfahren nach einem der vorstehenden Ansprüche,
**dadurch gekennzeichnet,**
**dass** die Isolierung eines als Störer aufgespürten Konferenzteilnehmers durch Stumm-Schalten oder Entfernen aus der Konferenz unter Steuerung der Konferenzmanagement-Funktion (KM) durchgeführt wird.

9. Verfahren nach einem der vorstehenden Ansprüche,
**dadurch gekennzeichnet,**
**dass** die Konfernzmanagement-Funktion (KM) die Daten erkannter Störer und zugehörige Indizien für Art und Dauer der Störung und getroffene Maßnahmen zur Abhilfe in der Datenbasis hinterlegt.

10. Verfahren nach einem der voranstehenden Ansprüche,
**dadurch gekennzeichnet,**
**dass** die Konferenzmanagement-Funktion die Verfügbarkeit von Konferenzfunktion (KF) und Erkennerfunktion (IVR) übergreifend kennt und Störerüberwachungen entsprechend initiiert.

11. Verfahren nach einem der voranstehenden Ansprüche,
**dadurch gekennzeichnet,**
**dass** die Konferenzmanagement-Funktion (KM), die Erkennerfunktion (IVR) sowie die Konferenzfunktion (KF) jeweils mindestens gedoppelt auf mindestens zwei unterschiedlichen HW-Plattformen realisiert sind.

12. Verfahren nach einem der voranstehenden Ansprüche,
**dadurch gekennzeichnet,**
**dass** die Konferenzmanagement-Funktion (KM) jederzeit in die Steuerung einer Konferenz eingreifen kann und die Erkennerfunktion (IVR) zur Störüberwachung routinemäßig und auf Betreiberkommando aktivieren kann.

13. Verfahren nach einem der voranstehenden Ansprüche,
**dadurch gekennzeichnet,**
**dass** die Konferenzmanagement-Funktion (KM), eine Erkennerfunktion (IVR), die zugleich Ansage- und Dialogfunktionen bereitstellt, dazu nutzt, den isolierten Störer über den Grund der Isolation zu informieren oder ihm die Auswahl möglicher Alternativen anzubieten.

14. Verfahren nach einem der vorstehenden Ansprüche,
**dadurchgekennzeichnet,**
dass für kleine Netzkonfigurationen mit beispielsweise nur einem einzigen Konferenzserver die Erkennerfunktion (IVR)/Konferenzmanagement-Funktion (KM) auch auf dem Konferenzsystem (K) selbst zum Ablauf gelangen kann.

15. Verfahren nach einem der vorstehenden Ansprüche,
**dadurch gekennzeichnet,**
**dass** der Eingangsnutzdatenstrom eines ausgezeichneten Konferenzteilnehmers vor dem Zumischen zum Konferenzmischsignal der Erkennerfunktion (IVR) permanent oder temporär zum Zwecke des Überwachens auf Störaktivitäten oder zur Erkennung von die Konferenz steuernden Eingaben zugespielt wird.

16. Vorrichtung zum Elimieren von Störern aus Konferenzen, mit mindestens einer Erkennerfunktion (IVR) und mindestens einer Konferenzfunktion (KF), die auf wenigstens einem Konferenzsystem (K) zum Ablauf gelangt,
**dadurch gekennzeichnet,**
**dass** eine Steuerschnittstelle (S) zwischen Erkennerfunktion (IVR) und einer Konferenzmanagement-Funktion (KM) vorgesehen ist, über die die Konferenzmanagement-Funktion (KM) die Störerüberwachung wenigstens einer Konferenz initiiert, steuert, erforderliche Konferenzdaten bereitstellt und das Ergebnis der Störerüberwachung zur Initiierung von Maßnahmen der Elimination von Störern erhält,
**dass** von der Konferenzmanagement-Funktion (KM) sukzessive auf alle laufenden Konferenzen zugegriffen wird, wobei der aus den Sprachinformationen aller Teilnehmer einer Konferenz (K1, K2, K3) gebildete Mischstrom von der Erkennerfunktionen (IVR) einer ersten Prüfung auf Störsignale hin unterzogen wird, und dass beim Aufspüren von Störsignalen in dem Mischstrom von der Konferenzmanagement-Funktion (KM) eine Zuordnung der ermittelten Störsignale zu dem diese abgebenden Konferenzteilnehmer vorgenommen wird, indem sukzessive auf die Sprachdaten aller Teilnehmer der gestörten Konferenz (K1, K2, K3) zugegriffen und der betreffende Sprachdatenstrom von der Erkennerfunktion (IVR) einer zweiten Prüfung auf Störsignale hin unterzogen wird.

## Claims

1. Method for eliminating sources of interference from conferences, having at least one recognition function (IVR) which is provided with a voice recognition function and having at least one conference function (KF),
**characterized**
**in that** a conference management function (KM) is provided which progressively accesses all ongoing conferences, wherein the mixed stream formed from the voice information from all participants in a conference (K1, K2, K3) is subjected to a first check for interference signals by a recognition function (IVR),
**in that** the detection of interference signals in the mixed stream prompts the conference management function (KM) to associate the ascertained interference signals with the conference participant which is outputting them by virtue of the voice data from all participants in the disrupted conference (K1, K2, K3) being progressively accessed and the relevant voice data stream being subjected to a second check for interference signals by the recognition function (IVR), and in that, if a conference participant is identified as a source of interference, then said conference participant is isolated from the conference.

2. Method according to Claim 1,
**characterized**
**in that** the current characteristic data from conferences and from the conference participants are stored in a database (DB), are updated when the conference functions (KF) are initiated or can be called when the recognition functions (IVR) are initiated.

3. Method according to Claims 1 and 2,
**characterized**
**in that** the recognition function (IVR) is provided with a possibly keyword-controlled (keyword spotting) voice recognition function.

4. Method according to Claims 1 to 3,
**characterized**
**in that** the interference signals are detected on the basis of interference criteria which are in the form of increased volume levels, supply of spurious sounds, swearwords or offensive contributions recognized by the voice recognition system, or legally prohibited contents.

5. Method according to one of the preceding claims,
**characterized**
**in that** connection to a particular conference or a particular conference participant is effected by virtue of the recognition system dialling into the respective conference system or by virtue of direct control of the conference system by the conference management function (KM), whereupon the user data stream arising from mixture is forwarded to the conference or to that user data stream of the particular conference participant which is arriving on the conference function, in addition to the recognition function (IVR).

6. Method according to one of the preceding claims,
**characterized**
**in that** the details of the monitoring are stored in the form of VoiceXML scripts on at least one content server (CS) which can be accessed by the recognition systems (IVR).

7. Method according to one of the preceding claims,
**characterized**
**in that** the VoiceXML pages comprising all the currently available and checkable conference points are generated by the content server (CS) using the status parameters obtained from the database (DB) and are made available to the requesting recognition system (IVR).

8. Method according to one of the preceding claims,
**characterized**
**in that** a conference participant detected as a source of interference is isolated by means of muting or removal from the conference under the control of the conference management function (KM).

9. Method according to one of the preceding claims,
**characterized**
**in that** the conference management function (KM) stores the data from recognized sources of interference and stores associated indices for the nature and duration of the interference and stores measures taken as a remedy in the database.

10. Method according to one of the preceding claims,
**characterized**
**in that** the conference management function has comprehensive knowledge of the availability of conference function (KF) and recognition function (IVR) and initiates source-of-interference monitoring operations accordingly.

11. Method according to one of the preceding claims,
**characterized**
**in that** the conference management function (KM), the recognition function (IVR) and the conference function (KF) are each implemented at least doubly on at least two different HW platforms.

12. Method according to one of the preceding claims,
**characterized**
**in that** the conference management function (KM) can take action in the control of a conference at any time and can activate the recognition function (IVR) to monitor interference routinely and upon a command from an operator.

13. Method according to one of the preceding claims,
**characterized**
**in that** the conference management function (KM) uses a recognition function (IVR), which simultaneously provides announcement and dialogue functions, for the purpose of informing the isolated source of interference about the reason for the isolation or for the purpose of providing said source of interference with the selection of possible alternatives.

14. Method according to one of the preceding claims
**characterized**
**in that** for small network configurations with, by way of example, only a single conference server, the recognition function (IVR)/conference management function (KM) can also be executed on the conference system (K) itself.

15. Method according to one of the preceding claims,
**characterized**
**in that** the input user data stream from a distinguished conference participant is fed to the recognition function (IVR) permanently or temporarily prior to admixture with the conference mixed signal, for the purpose of monitoring for interference activities or for recognizing inputs controlling the conference.

16. Apparatus for eliminating sources of interference from conferences, having at least one recognition function (IVR) and at least one conference function (KF) which is executed on at least one conference system (K),
**characterized**
**in that** a control interface (S) is provided between recognition function (IVR) and a conference management function (KM) and is used by the conference management function (KM) to initiate the source-of-interference monitoring for at least one conference, to control it, to provide requisite conference data and to receive the result of the source-of-interference monitoring for the purpose of initiating measures to eliminate sources of interference,
**in that** the conference management function (KM) progressively accesses all ongoing conferences, wherein the mixed stream formed from the voice information from all participants in a conference (K1, K2, K3) is subjected to a first check for interference signals by the recognition function (IVR), and
**in that** the detection of interference signals in the mixed stream prompts the conference management function (KM) to associate the ascertained interference signals with the conference participant which is outputting them by virtue of the voice data from all participants in the disrupted conference (K1, K2, K3) being progressively accessed and the relevant voice data stream being subjected to a second check for interference signals by the recognition function (IVR).

## Revendications

1. Procédé pour éliminer des perturbateurs de conférences, avec au moins une fonction de reconnaissance (IVR) dotée d'une fonction de reconnaissance vocale, et au moins une fonction de conférence (KF), **caractérisé en ce que**
- une fonction de gestion de conférences (KM) est mise à disposition, laquelle accède successivement à toutes les conférences en cours, le flux mixte formé à partir des informations vocales de tous les participants d'une conférence (K1, K2, K3) étant soumis par une fonction de reconnaissance (IVR) à un premier contrôle quant à des signaux perturbateurs ;
- à la détection de signaux perturbateurs dans le flux mixte, la fonction de gestion de conférences (KM) procède à une affectation des signaux perturbateurs déterminés au participant de la conférence qui les émet, en accédant successivement aux données vocales de tous les participants de la conférence perturbée (K1, K2, K3) et du fait que le flux de données vocales concerné est soumis par la fonction de reconnaissance (IVR) à un deuxième contrôle quant à des signaux perturbateurs ; et
- si un participant de la conférence est identifié comme perturbateur, celui-ci est isolé de la conférence.

2. Procédé selon la revendication 1, **caractérisé en ce que** les données caractéristiques actuelles de conférences et des participants de la conférence sont déposées dans une base de données (DB), sont actualisées sur impulsion des fonctions de conférence (KF) ou peuvent être appelées sur impulsion des fonctions de reconnaissance (IVR).

3. Procédé selon la revendication 1, 2, **caractérisé en ce que** la fonction de reconnaissance (IVR) est pourvue d'une fonction de reconnaissance vocale qui est, le cas échéant, commandée par mot clé(Keyword Spotting).

4. Procédé selon la revendication 1 à 3, **caractérisé en ce que** les signaux perturbateurs sont détectés selon des critères de perturbation qui se présentent sous la forme de niveaux sonores accrus, d'injection de sons perturbateurs, de gros mots reconnus par le système de reconnaissance vocale ou de propos inconvenants ou de contenus interdits par la loi.

5. Procédé selon l'une des revendications précédentes, **caractérisé en ce que** la connexion à une conférence déterminée ou à un participant déterminé d'une conférence se produit par connexion du système de reconnaissance au système de conférence respectif ou par commande directe du système de conférence par la fonction de gestion de conférences (KM), suite à quoi le flux de données utiles de la conférence qui résulte du mélange ou le flux de données utiles du participant déterminé d'une conférence qui arrive sur la fonction de conférence est retransmis additionnellement vers la fonction de reconnaissance (IVR).

6. Procédé selon l'une des revendications précédentes, **caractérisé en ce que** les détails du monitorage sont déposés sous la forme de scripts VoiceXML sur au moins un serveur de contenus (CS) accessible par les systèmes de reconnaissance (IVR).

7. Procédé selon l'une des revendications précédentes, **caractérisé en ce que** les pages VoiceXML qui comprennent tous les points de conférence actuellement disponibles et à contrôler sont générées par le serveur de contenus (CS) à l'aide des paramètres d'état obtenus à partir de la base de données (DB) et sont mises à la disposition du système de reconnaissance demandeur (IVR).

8. Procédé selon l'une des revendications précédentes, **caractérisé en ce qu'**un participant de conférence détecté comme perturbateur est isolé par coupure du son ou retrait de la conférence sous la commande de la fonction de gestion de conférences (KM).

9. Procédé selon l'une des revendications précédentes, **caractérisé en ce que** la fonction de gestion de conférences (KM) dépose dans la base de données les données de perturbateurs qui ont été identifiés et des indices associés relatifs à la nature et à la durée de la perturbation ainsi que des mesures prises pour y remédier.

10. Procédé selon l'une des revendications précédentes, **caractérisé en ce que** la fonction de gestion de conférences connaît dans son ensemble la disponibilité de la gestion de conférences (KF) et de la fonction de reconnaissance (IVR) et initialise des surveillances de perturbateurs en conséquence.

11. Procédé selon l'une des revendications précédentes, **caractérisé en ce que** la fonction de gestion de conférences (KM), la fonction de reconnaissance (IVR) et la fonction de conférence (KF) sont réalisées chacune au moins en double sur au moins deux plates-formes matérielles différentes.

12. Procédé selon l'une des revendications précédentes, **caractérisé en ce que** la fonction de gestion de conférences (KM) peut intervenir à tout moment dans la commande d'une conférence et peut activer la fonction de reconnaissance (IVR) pour la surveillance des perturbations de manière routinière et sur commande de l'exploitant.

13. Procédé selon l'une des revendications précédentes, **caractérisé en ce que** la fonction de gestion de conférences (KM) utilise une fonction de reconnaissance (IVR), qui fournit en même temps des fonctions d'annonce et de dialogue, pour informer le perturbateur isolé de la raison de l'isolation ou lui offrir le choix d'alternatives possibles.

14. Procédé selon l'une des revendications précédentes, **caractérisé en ce que**, pour de petites configurations de réseau avec, par exemple, uniquement un seul serveur de conférences, la fonction de reconnaissance (IVR) /fonction de gestion de conférences (KM) peut se mettre à tourner d'elle-même sur le système de conférence (K).

15. Procédé selon l'une des revendications précédentes, **caractérisé en ce que** le flux de données d'entrée d'un participant de conférence désigné est, avant le mélange, envoyé sur le signal mixte de conférence de la fonction de reconnaissance (IVR), en permanence ou temporairement, en vue de la surveillance quant à des activités perturbatrices ou afin de reconnaître des saisies de commande de la conférence.

16. Dispositif pour éliminer des perturbateurs de conférences, avec au moins une fonction de reconnaissance (IVR) dotée d'une fonction de reconnaissance vocale, et au moins une fonction de conférence (KF) destinée à tourner sur au moins un système de conférence (K), **caractérisé en ce que**
- est prévue, entre la fonction de reconnaissance (IVR) et une fonction de gestion de conférences (KM), une interface de commande (S) via laquelle la fonction de gestion de conférences (KM) initialise et commande la surveillance de perturbateurs d'au moins une conférence, fournit des données de conférence nécessaires et reçoit le résultat de la surveillance de perturbateurs pour initialiser des mesures d'élimination de perturbateurs,
- la fonction de gestion de conférences (KM) accède successivement à toutes les conférences en cours, le flux mixte formé à partir des informations vocales de tous les participants d'une conférence (K1, K2, K3) étant soumis par la fonction de reconnaissance (IVR) à un premier contrôle quant à des signaux perturbateurs ; et
à la détection de signaux perturbateurs dans le flux mixte, la fonction de gestion de conférences (KM) procède à une affectation des signaux perturbateurs déterminés au participant de la conférence qui les émet, en accédant successivement aux données vocales de tous les participants de la conférence perturbée (K1, K2, K3) et du fait que le flux de données vocales concerné est soumis par la fonction de reconnaissance (IVR) à un deuxième contrôle quant à des signaux perturbateurs.
